# EUROPEAN PATENT SPECIFICATION

(11) **EP 0 521 659 B1**
(45) Date of publication and mention of the grant of the patent: **03.02.1999**
(21) Application number: 92305881.2
(22) Date of filing: 25.06.1992
(51) Int. Cl.: H04N 3/185, H04N 3/223

(54) **High voltage stabilization circuit for video display apparatus**
Hochspannungsstabilisierkreis für Videoanzeigegerät
Circuit de stabilisation à haute tension pour appareil d'affichage vidéo

(30) Priority: 01.07.1991 GB 9114168; 28.02.1992 US 843341
(43) Date of publication of application: 07.01.1993
(60) Divisional application: 98113323.4
(73) Proprietor: RCA Thomson Licensing Corporation, Princeton, NJ 08540 (US)
(72) Inventor: Haferl, Peter Eduard, CH-8134 Adliswil (CH)
(74) Representative: Ahrens, Thomas, Dipl.-Phys.

(56) References cited:
- EP-A- 0 313 391
- EP-A- 0 334 658
- GB-A- 2 135 859
- US-A- 4 298 829
- US-A- 4 318 036
- US-A- 5 010 281

## Description

This invention relates to a power supply for a television apparatus with high voltage stabilization.

A regulated power supply for a video display apparatus according to the preamble of claim 1 is disclosed in US-A-4,298,829.

In television receiver or monitor circuits, the ultor accelerating potential or high voltage for a picture tube is, typically, derived by rectifying a retrace pulse voltage developed in a high voltage winding of a horizontal output flyback transformer. The retrace pulse voltage is developed by a horizontal deflection circuit output stage that is coupled to the high voltage winding via a primary winding of the flyback transformer. The horizontal deflection circuit output stage comprises a horizontal deflection winding, a retrace capacitor and a trace switch, comprising a damper diode and a horizontal output transistor.

In typical television receiver circuits, raster size is inversely proportional to the square root of the ultor accelerating potential. Because the high voltage circuit exhibits a certain amount of source impedance, increasing the load current drawn from the ultor terminal will result in a decreased ultor accelerating potential. Ultor voltage variations resulting from variation of beam current occur mainly due to a leakage inductance between the high voltage and the primary winding of the flyback transformer. Ultor voltage variations may lead to reduced performance. The reduced performance is manifested by undesirable raster size variations, reduced peak brightness and poor focus at high beam currents.

The inner and outer aquadag of the picture tube act as a capacitance that is charged by flyback transformer current, during retrace, and is discharged by the beam current. Increasing beam current requires increasing charge current, during retrace. This leads to increased loading of the deflection retrace circuit that includes a deflection winding, causing an increased retrace time width and reduced retrace or flyback voltage pulse amplitude. The result is a further reduction of performance because of "S" shaping variation due to retrace time width variation as a function of the beam current.

The introduction of very large picture tubes and in particular the introduction of the 16:9 aspect ratio picture tubes may require improved performance of the high voltage and deflection circuits. For example, the display of a 4:3 picture on a 16:9 picture tube will show the left and right hand picture borders. Any display breathing or deflection disturbance due to retrace voltage amplitude and/or width variation may be visible because the masking overscan is missing. It may be desirable to improve stability of high voltage and retrace width with beam current variation.

The present invention relates to a regulated power supply for a video display apparatus, comprising a retrace resonant circuit that includes a deflection winding, a flyback transformer, a source of an input supply voltage that is coupled to a first winding of said transformer, first switching means responsive to said input signal and coupled to said deflection winding and to said transformer for generating a deflection current in said deflection winding, during a deflection cycle, and a first pulse in said first winding of said transformer, during retrace, a source of a synchronization input signal at a frequency that is related to a deflection frequency, which is connected to a base of said first switching means and a pulse-width-modulator responsive to a control signal for generating a pulse-width-modulated signal that is modulated in accordance with said control signal. Second switching means are responsive to said pulse-width-modulated signal and coupled to a second winding of said transformer for generating a second pulse in said second winding, during retrace, that is modulated in accordance with said modulated signal, both said first and second pulses being transformer-coupled to a load circuit via said transformer for generating one of a regulated load voltage and a regulated load current in said load circuit, and an inductance is coupled to said second winding to form a current path for producing a current in said second winding having a rate of change, during trace, that is determined by a value of said inductance and that is modulated in accordance with said pulse-width-modulated signal.

In accordance with an aspect of the invention, an energy storage coil is coupled in parallel with a winding of a flyback transformer during a controllable time interval beginning during the second half of horizontal trace and ending during retrace. The energy stored in the coil during the trace portion is transferred to the flyback transformer during retrace to enhance high voltage at high beam currents. The amount of energy is controlled or regulated to obtain a stabilized high voltage.

In accordance with another aspect of the invention, the energy storage coil is parallel coupled to a retrace resonant circuit during the energy transfer interval and thus stabilizes also the horizontal retrace time which might have otherwise increased with increasing beam current.

A regulated power supply embodying a further aspect of the invention, includes a retrace resonant circuit that includes a deflection winding. A deflection current is generated in the deflection winding, during a deflection cycle and a first pulse is generated in a first winding of a flyback transformer, during retrace. A pulse-width-modulator is responsive to a control signal for generating a pulse-width-modulated signal that is modulated in accordance with the control signal. A switching arrangement generates a second pulse in the second winding, during retrace, that is modulated in accordance with the modulated signal. Both the first and second pulses are transformer-coupled to a load circuit via the transformer for generating one of a regulated load voltage and a regulated load current in the load circuit.
FIGURE 1 illustrates a horizontal deflection circuit with ultor voltage regulation circuit with ultor voltage sensing, embodying an aspect of the invention;
FIGURES 2a-2e and 3a-3f illustrate waveforms useful for explaining the operation of the circuit of FIGURE 1;
FIGURE 4 illustrates a second embodiment of the invention in which an ultor voltage regulation circuit senses directly a transformer current; and
FIGURE 5 illustrates a third embodiment of the invention that includes a raster distortion correction circuit.

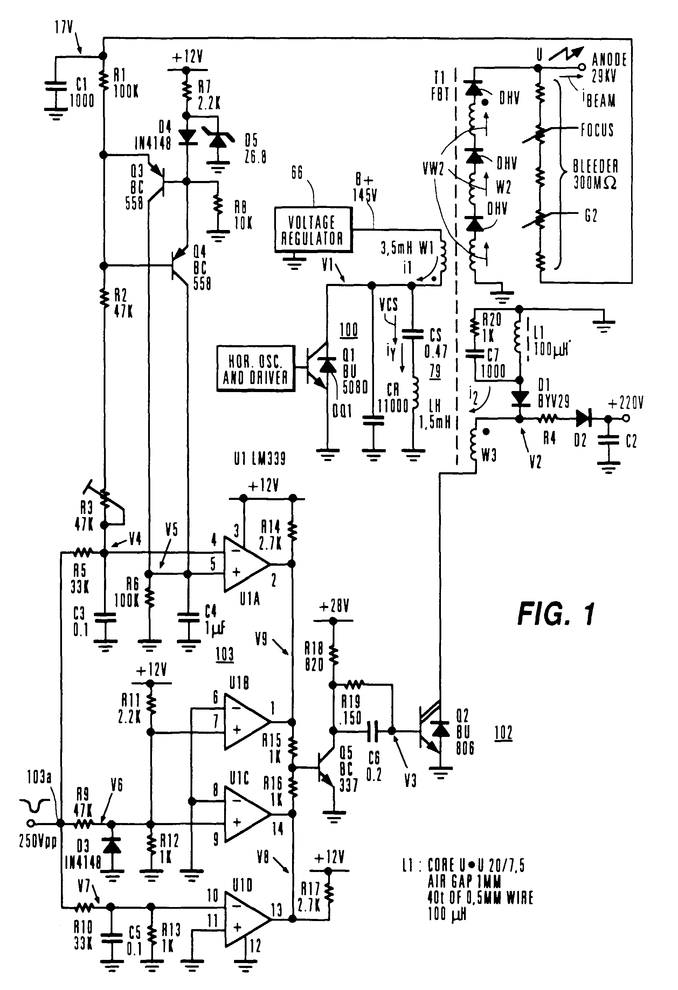

FIGURE 1 illustrates a horizontal deflection circuit 100 and a high voltage stabilization or regulator circuit 102, embodying an aspect of the invention, that generates a stabilized ultor voltage U. The arrangement of FIGURE 1 may be used in conjunction with, for example, a 37" color picture tube, not shown, of the type Mitsubishi A89JKA81X. For simplicity, east-west raster correction, horizontal linearity correction and component values, which are not relevant for explaining the invention, are omitted from FIGURE 1.

A switching transistor Q1 of deflection circuit 100, responsive to a horizontal rate drive signal, generates a horizontal rate retrace voltage V1. Voltage V1 is generated in a deflection retrace or flyback resonant circuit 79. Voltage V1 is coupled via a primary winding W1 of a flyback transformer T1 to a high voltage winding W2 to form a horizontal rate retrace or flyback high voltage VW2 in each winding portion of winding W2. Circuit 79 includes a deflection winding LH in which a deflection current iy is generated. Rectifying diodes, DHV, coupled in a diode-split configuration to the winding portions of winding W2, produce an ultor voltage U that is coupled to the anode of the picture tube, not shown.

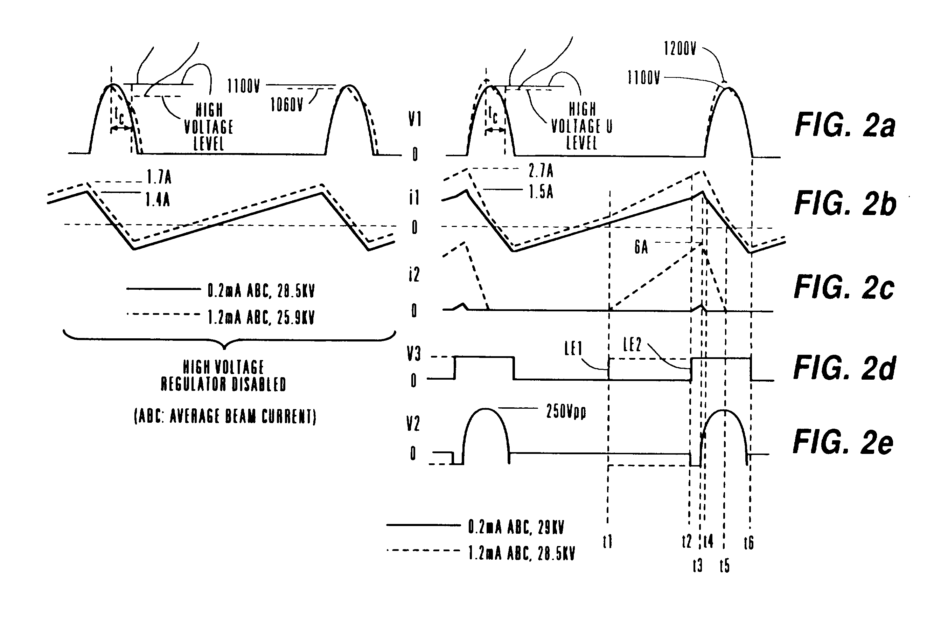

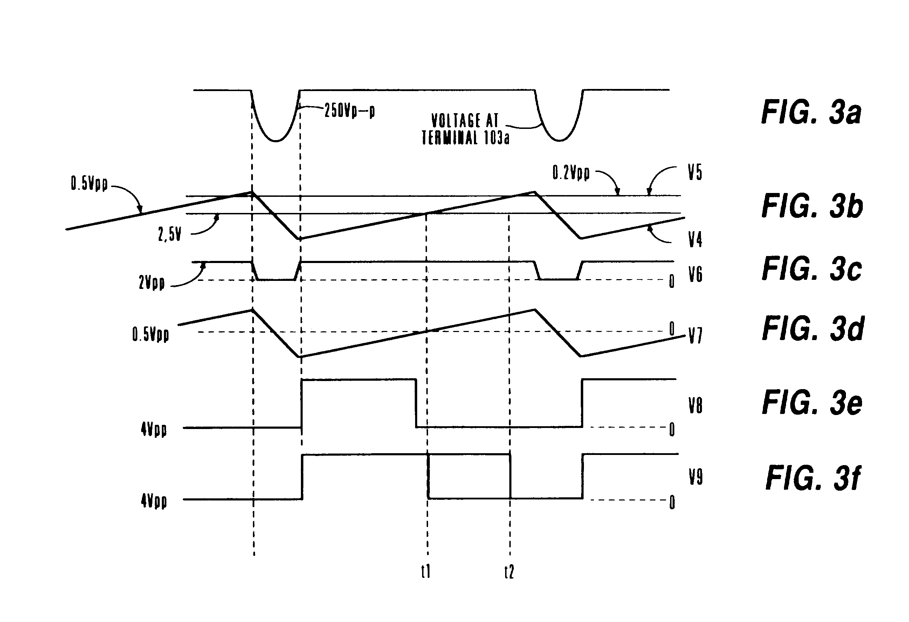

FIGURES 2a-2e and 3a-3f illustrate waveforms useful for the explanation of the circuit of FIGURE 1. Similar symbols and numerals in FIGURES 1, 2a-2e and 3a-3f indicate similar items or functions. The waveforms of FIGURES 2a-2e are drawn in solid lines for 0.2 mA average beam current beam and in broken lines for 1.2 mA average beam current.

The waveforms on the left hand side of FIGURES 2a and 2b, referred to herein as left FIGURES 2a and 2b, respectively, are used to explain the operation when high voltage regulator circuit 102 is disabled. In this case, retrace voltage V1 of FIGURE 1 decreases at high beam current, as shown in broken line, and the retrace time tends to increase. An interval tc indicates the conduction interval of high voltage rectifying diodes DHV integrated in winding W2 of flyback transformer T1. Interval tc is negligibly small at low beam currents, as shown in left FIGURE 2a, but increases at high beam currents because of the leakage inductance between windings W1 and W2 of FIGURE 1. As a result, ultor voltage U decreases significantly from 28.5 to 25.9KV. The high voltage level U is equal approximately to the retrace voltage at the center of interval tc, at left FIGURE 2a. The slopes of a primary current il of left FIGURE 2b are determined by a supply voltage B+ of FIGURE 1 that is coupled to winding W1, the inductance of winding W1 and the retrace resonant frequency of circuit 79. Voltage B+ is coupled to the undotted terminal of winding W1. Voltage B+ is supplied by a voltage regulator 66.

A negative portion of current il representing recovered energy flows back to voltage regulator 66 that regulates voltage B+. Current il increases to a peak amplitude of 1.7A at high beam current. The increase appears as an added D.C. component causing the negative portion of current il to decrease. When the negative peak of current ie reaches zero, no energy is recovered and a damper diode DQ1, coupled in parallel with transistor Q1, cannot conduct. Excessive D.C. component may lead to an improper operation causing deflection distortions and a reduction of the high voltage.

In accordance with an inventive feature, high voltage regulator circuit 102 includes an energy storage coil or inductor L1, a diode D1 and a winding W3 of transformer T1 coupled in series with a collector-emitter current path of a switching transistor Q2 that is controlled by a control circuit 103. Diode D1 is conductive during a controllable portion of trace. A snubber network that includes a capacitor C7 and a resistor R20 across coil L1 prevents excessive ringing when diode D1 cuts-off during the retrace interval. The waveforms of right FIGURES 2a-2e are used for explaining the normal operation of high voltage regulator circuit 102. Advantageously, winding W3 of FIGURE 1 is also employed in a retrace voltage power supply that includes a rectifier D2, a current limiting resistor R4 and a filter capacitor C2 to obtain a supply voltage in capacitor C2 for energizing video output amplifiers, not shown.

A high voltage representative voltage is developed at the emitter of transistor Q3 that is coupled to a voltage divider. The voltage divider further includes a bleeder resistor BLEEDER. A control circuit 103 generates a base drive voltage V3 of transistor Q2, having a waveform of FIGURE 2d. A leading edge LE of voltage V3, that causes transistor Q2 to begin conducting is phase-modulated in accordance with the voltage across resistor R1, in an interval t1-t2 that occurs during trace. The voltage across resistor R1 varies when ultor voltage U varies. Transistor Q2 of FIGURE 1 conducts at low beam current or at high ultor voltage U, during an interval t2-t6 of FIGURE 2d, as shown in solid line. Increasing beam current or a decrease in voltage U causes leading edge LE of voltage V3 to advance from time t2 toward time t1, as shown in broken line that corresponds to a 1.2 mA beam current. Transistor Q2 conducts during interval t1-t6 and clamps a voltage at an undotted terminal of winding W3 to ground potential. A negative trace voltage V2 of FIGURE 2e at a dotted terminal of winding W3 produces an up-ramping current i2 of FIGURE 2c that flows from ground through inductor L1, diode D1, winding W3 and transistor Q2.

Current i2 reaches its peak amplitude at time t3, the beginning of the retrace interval. Current i2 and the impedance of coil L1 are reflected in primary winding W1, according to the winding ratio of windings W3 and W1. Current il at right FIGURE 2b increases at a higher rate than in left FIGURE 2b, during interval t1-t3, because the transformer-coupled inductance of coil L1 reduces the inductance of primary winding W1. Current il reaches a higher peak value, shown in broken lines at right FIGURE 2b, than at left FIGURE 2b due to the transformer-coupled current i2 of FIGURE 2c. The peak amplitude of current i2 at time t3 determines the stored energy in coil L1. By transformer coupling, the stored energy is also indicated by the difference of the peak amplitudes between current il in left FIGURE 2b and current il in right FIGURE 2b.

The magnetic energy in each of transformer T1, coil L1 and deflection winding LH is transferred as a retrace current flow into a capacitor CR of circuit 79 of FIGURE 1 during the first half of the retrace interval to produce a retrace voltage V1 of right FIGURE 2a. Current i2 flowing through winding W3 is a down-ramping current because of the positive retrace voltage V2 at the dotted terminal of winding W3. Current i2 reaches a zero level at time t5 of FIGURE 2c. Diode D1 of FIGURE 1 is then reverse biased by retrace voltage V2 and decouples coil L1 from winding W3. Thus, coil L1 is parallel-coupled to retrace circuit 79, as long as down-ramping current i2 flows.

A trace voltage VCS, developed across a trace capacitor CS that is coupled in series with deflection winding LH, has a D.C. voltage component that is equal to voltage B+. The D.C. voltage component of voltage VCS is substantially unaffected by variation of the conduction interval of transistor Q2 of circuit 102. Deflection current iy is regulated in accordance with the D.C. voltage component of voltage VCS that is determined by voltage B+. Voltage B+ is regulated independently of the operation of high voltage regulator circuit 102.

In accordance with an inventive feature, the negative feedback loop that includes circuit 102 regulates ultor voltage U without significantly affecting deflection current iy. Thus, a change in the peak amplitude of current i2 caused by a change in beam current loading does not affect current iy that is regulated separately by voltage B+.

In accordance with another inventive feature, the retrace frequency increases during current i2 conduction interval, t3-t5 of FIGURE 2c, to compensate for retrace time modulation that is caused by beam current variations. Therefore, voltage V1 of right FIGURE 2a increases faster at high beam current than at low beam current, as shown by the difference between the solid and broken lines. The additional energy transferred from coil L1 of FIGURE 1 produces a higher peak amplitude of voltage V1 at high beam current than at low beam current. As a result, advantageously, the decrease in high voltage U is smaller at high beam current and the retrace time remains constant.

At high beam currents, the level of the high voltage U is approximately equal to an average value of pulse voltage V1, as shown in the broken line of FIGURE 2a, that occurs during interval tc when rectifying diodes DHV of FIGURE 1 are conductive. The average value of voltage V1 during interval tc is approximately equal to the peak value of voltage V1 at low beam current. The difference between voltage U at high and low beam currents at right FIGURE 2a is, advantageously, much smaller when compared with that shown in left FIGURE 2a.

Circuit 103 produces pulse-width-modulated voltage V3 that controls transistor Q2. In circuit 103, a low voltage end of bleeder resistor BLEEDER is coupled to a filter capacitor C1, and via, resistor R1, to an emitter of a transistor Q3. A biasing network that includes a resistor R7, a diode D4, a zener diode D5 and a resistor R8 provides a stable reference base voltage of transistor Q3 and an emitter voltage of a transistor Q4.

A bleeder current in resistor R1 is split into a greater portion that flows through a series arrangement of a resistor R2, a resistor R3, a resistor R5 and a flyback transformer winding, not shown, of transformer T1 to ground. That flyback winding in the current path of resistors R2, R3 and R5 generates a 250 Vpp negative going retrace pulse at a terminal 103a. For D.C. purposes, the voltage at terminal 103a represents ground potential. The retrace pulses at terminal 103a are integrated by an integration network that includes resistor R5 and a capacitor C3 to produce a sawtooth voltage V4.

The other, and smaller, portion of the bleeder current flows through transistor Q3 and through a beam current sampling load resistor R6. A high voltage representative voltage V5 developed across resistor R6 is filtered by a capacitor C4. Whereas, voltage V4 across resistor R5 is not modulated by high voltage variations because the emitter of transistor Q3 is at a constant D.C. potential. Voltage V5 varies with ultor voltage variations, as shown in FIGURE 3b. Advantageously, the current that flows through resistors R2, R3 and R5 reduces the D.C. level of voltage V5, thus enabling the usage of a higher value resistor for resistor R6.

Voltage V4 is compared with voltage V5 by a voltage comparator U1A for modulating a trailing edge of voltage V9 during an interval t1-t2 of FIGURE 3f. Comparators U1B and U1C of FIGURE 1 are driven by retrace pulse voltage V6 to hold down output voltages V8 and V9 of comparators U1B and U1C, respectively, during retrace. A comparator U1D is driven by a sawtooth voltage V7 of FIGURE 3d produced by an R-C network of a resistor R10 of FIGURE 1 and a capacitor C5. Output voltage V8 prevents transistor Q2 from being turned on during the first half of the trace interval. Voltages V8 and V9 are summed via resistors R16 and R15 to drive a base of a transistor Q5. Transistor Q5 produces, at its collector, voltage V3 that is also developed at the base of transistor Q2. High voltage U is adjusted by a variable resistor R3 which varies in a differential manner the D.C. levels of voltages V4 and V5.

Transistor Q4 provides protection by disabling circuit 103 and transistor Q2. When the bleeder current falls below approximately 70% of its nominal value, transistor Q3 becomes disabled or nonconductive and transistor Q4 becomes conductive. The current flowing through resistor R7, diode D4 and transistor Q4 charges capacitor C4 to a higher voltage than voltage V4, causing the sum of voltages V8 and V9 to be positive during trace. As a result, transistor Q2 cannot conduct during trace and current i2 is zero. Such fault condition can occur with a defective or disconnected bleeder resistor. Advantageously, the protection operation provides a soft start-up operation because the high voltage regulator is disabled until high voltage U is equal to at least 70% of its nominal value.

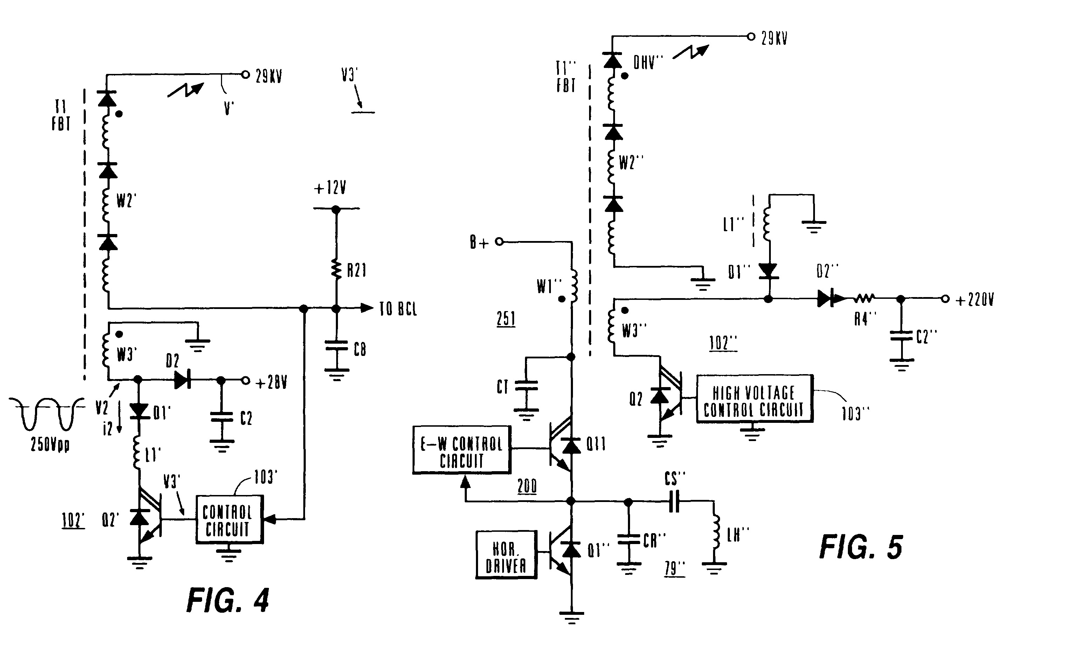

FIGURE 4 illustrates a high voltage regulator 102', embodying another aspect of the invention. Similar symbols and numerals in FIGURES 1 and 4, with the exception of the symbol (') in FIGURE 4, indicate similar items or functions. Series coupled diode D1', inductor L1' and transistor Q2' of FIGURE 4 are coupled to a winding W3' which supplies negative going retrace pulses. Winding W3' is also used as a voltage source for a trace rectifier D2', for producing in a capacitor C2' a supply voltage of 28 volts required by, for example, a vertical deflection amplifier, not shown.

The operation of a high voltage regulator circuit 102' is similar to circuit 102 described in FIGURE 1. The waveforms in FIGURES 2a-2e with respect to the circuit of FIGURE 1 are also applicable with respect to the circuit of FIGURE 4 except for the waveform of FIGURE 2e which is inverted, as shown in FIGURE 4. A difference between control circuit 103' of FIGURE 4 and circuit 103 of FIGURE 1 is that control circuit 103' of FIGURE 4 is controlled directly by a sample of the high voltage charge current in winding W2' instead of directly by ultor voltage U, as shown on FIGURE 1. The charge current through winding W2' of FIGURE 4 is sampled across a resistor R21 of FIGURE 4. A capacitor C8 provides filtering. The charge current through resistor R21 is inverse proportional to high voltage U'. Therefore, the arrangement of FIGURE 4 can operate properly in an open loop configuration. The circuit of FIGURE 4 may be employed in a high voltage circuit that does not include a bleeder resistor.

A regulation circuit 102" of FIGURE 5, embodying an aspect of the invention, provides ultor voltage regulation and operates similarly to that described with respect to the circuit of FIGURE 1. In FIGURE 5, an E-W raster distortion corrected horizontal deflection circuit 200 is included. Similar symbols and numerals in FIGURES 1 and 5, with the exception of the symbol (") in FIGURE 5, indicate similar items or functions.

An E-W switching transistor Q11 of FIGURE 5 is conductive and supplies a controllable amount of energy to deflection resonant circuit 79" during a first portion of the retrace interval for obtaining an East-West amplitude modulated deflection current. Horizontal retrace begins when transistor Q1" is turned off. Transistor Q11 is maintained conductive from a time at the beginning of the horizontal trace interval and until a controllable instant during the first portion of horizontal retrace . The retrace, first portion begins at the time transistor Q1" becomes nonconductive. The length of the first portion varies in a vertical rate manner to provide East-West raster distortion correction. Following the retrace, first portion, transistor Q11 becomes nonconductive and isolates a flyback resonant circuit 251, that includes winding W1" and a flyback capacitance CT, from resonant circuit 79". High voltage regulation circuit 102" is also isolated from retrace circuit 79", during a second portion of the retrace interval, when diodes DHV are conductive. As a result, circuit 102" is not by-passed by circuit 79". Therefore, the efficiency of circuit 102" is, advantageously, increased.

The operation of the deflection circuit that includes circuit 79", circuit 200 and circuit 251 is described in more detail in allowed U.S. Patent Application Serial No. 722,809, filed June 28, 1991, entitled, RASTER DISTORTION CORRECTION CIRCUIT in the name of Haferl, published May 19, 1992 as US-A-5 115 171.

## Claims

1. A regulated power supply for a video display apparatus, comprising:
a retrace resonant circuit (79) that includes a deflection winding (LH);
a flyback transformer (T1);
a source (66) of an input supply voltage (B+) that is coupled to a first winding (W1) of said transformer;
first switching means (Q1) responsive to said input signal and coupled to said deflection winding and to said transformer for generating a deflection current (iy) in said deflection winding, during a deflection cycle, and a first pulse (V1) in said first winding of said transformer, during retrace;
a source of a synchronization input signal at a frequency that is related to a deflection frequency, which is connected to a base of said first switching means (Q1);
a pulse-width-modulator (103) responsive to a control signal (V4) for generating a pulse-width-modulated signal (V3) that is modulated in accordance with said control signal; **characterized by**
second switching means (Q2, D1) responsive to said pulse-width-modulated signal and coupled to a second winding (W3) of said transformer for generating a second pulse in said second winding, during retrace, that is modulated in accordance with said modulated signal, both said first and second pulses being transformer-coupled to a load circuit (ANODE) via said transformer for generating one of a regulated load voltage (U) and a regulated load current (i_{BEAM}) in said load circuit; and,
an inductance (L1) coupled to said second winding to form a current path for producing a current (i₂) in said second winding having a rate of change, during trace, that is determined by a value of said inductance and that is modulated in accordance with said pulse-width-modulated signal.

2. A power supply according to Claim 1 characterized in that said first switching means (Q1) applies said input supply voltage (B+) across said first winding (W1) of said transformer (T1) for transformer-coupling said input supply voltage to said second winding (W3), during trace, to develop a trace voltage in said second winding that produces in said inductance (L1) said second winding current (i₂).

3. A power supply according to Claim 2 characterized in that said second (W3) winding is energized entirely via said transformer (T1).

4. A power supply according to Claim 1 characterized in that said second winding current (i₂) is transformer-coupled to said load circuit (ANODE), during retrace.

5. A power supply according to Claim 1 characterized in that said first pulse (V1) is transformer-coupled to a high voltage winding (W2) of said transformer (T1) and wherein a rectifier (DHV) is coupled to said high voltage winding for generating from said first pulse an ultor voltage (U) and a beam current (i_{BEAM}).

6. A power supply according to Claim 5 characterized in that said pulse-width modulator (103) is responsive to one of said ultor voltage (U) and a current (i_{BEAM}) that flows in said high voltage winding for regulating said ultor voltage in a feedback manner.

7. A power supply according to Claim 1 characterized in that the modulation of said pulse-width-modulated signal (V3) does not affect said deflection current (iy).

8. A power supply according to Claim 1 characterized in that said input supply voltage (B+) produces a current (i1) in said first winding (W1) of said transformer (T1) to store magnetic energy in said transformer, during trace, the stored magnetic energy replenishing energy losses in said retrace resonant circuit (79) and in said load circuit (ANODE), during retrace.

9. A power supply according to Claim 1 characterized in that said pulse-width-modulated signal (V3) is modulated, during trace.

10. A power supply according to Claim 1 characterized by, an inductance (L1) coupled to said second winding (W3) of said transformer (T1) for conducting in said inductance a ramping, second current (12) having a peak amplitude that is modulated in accordance with a beam current (i_{BEAM}), wherein said second switching means (Q2) decouples said inductance from said transformer during a first portion (t5-56, Fig. 2b) of a retrace interval (t3-t6) and couples said inductance to said transformer during a second portion (t3-t5) of said retrace interval and wherein a length of each of said first and second portions varies in accordance with said beam current (i_{BEAM}).

11. A power supply according to Claim 10 characterized in that said inductance (L1) is formed in a current path of said second winding current (i2) and is coupled via said transformer (T1) to said retrace resonant circuit (79) to vary a retrace resonance frequency of said retrace resonant circuit in accordance with said beam current (i_{BEAM}) in a manner to compensate for retrace time modulation that is caused by a variation of said beam current.

12. A power supply according to Claim 1 characterized in that said second switching means (Q2, D1) comprises a two-terminal rectifier (D1).

13. A power supply according to Claim 1 characterized in that said pulse-width modulator (103) is responsive to one of said load current and voltage (U) for varying a pulse-width of said modulated signal (V3) in accordance with one of said load current and voltage.

14. A power supply according to Claim 1 characterized in that said deflection current (iy) is regulated in accordance with said input supply voltage (B+) and is unaffected by the pulse-width modulation.

## Patentansprüche

1. Geregelte Stromversorgung für eine Video-Anzeigevorrichtung, umfassend:
eine Rücklauf-Resonanzschaltung (79), die eine Ablenkwicklung (LH) enthält;
einen Zeilenendtransformator (T1);
eine Quelle (66) für eine Eingangs-Versorgungsspannung (B+), die mit einer ersten Wicklung (W1) des Transformators verbunden ist;
erste Schaltmittel (Q1), die auf das Eingangssignal ansprechen und mit der Ablenkwicklung und dem Transformator verbunden sind, um in der Ablenkwicklung während eines Ablenkzyklus einen Ablenkstrom und in der ersten Wicklung des Transformators während des Rücklaufs einen ersten Impuls (Vl) zu erzeugen;
eine Quelle für ein Synchronisations-Eingangssignal mit einer Frequenz, die auf die Ablenkfrequenz bezogen ist, die mit einer Basis der ersten Schaltmittel (Q1) verbunden ist; einen Impulsbreitenmodulator (103), der auf ein Steuersignal (V4) anspricht, um ein impulsbreitenmoduliertes Signal (V3) zu erzeugen, das gemäß dem Steuersignal moduliert wird,
gekennzeichnet durch:
zweite Schaltmittel (Q2, D1), die auf das impulsbreitenmodulierte Signal ansprechen und mit einer zweiten Wicklung (W3) des Transformators verbunden sind, um einen zweiten Impuls in der Wicklung während des Rücklaufs zu erzeugen, der gemäß dem modulierten Signal moduliert wird, wobei der erste und der zweite Impuls mit einer Lastschaltung (ANODE) über den Transformator transformatorisch gekoppelt sind, um in der Lastschaltung eine geregelte Lastspannung (U) oder einen geregelten Laststrom (i_{BEAM}) zu erzeugen, und;
eine Induktivität (L1), die mit der zweiten Wicklung verbunden ist, um einen Stromweg zur Erzeugung eines Stroms (i₂) in der zweiten Wicklung mit einer Änderungsrate während des Hinlaufs zu erzeugen, die durch einen Wert der Induktivität bestimmt ist, und die gemäß dem impulsbreitenmodulierten Signal moduliert wird.

2. Stromversorgung nach Anspruch 1, dadurch gekennzeichnet, daß die ersten Schaltmittel (Ql) die Eingangs-Versorgungsspannung (B+) der ersten Wicklung (W1) des Transformators (T1) zuführen, um die Eingangs-Versorgungsspannung der zweiten Wicklung (W3) während des Hinlaufs transformatorisch gekoppelt zuzuführen und in der zweiten Wicklung eine Hinlaufspannung zu erzeugen, die in der Induktivität (L1) den zweiten Wicklungsstrom (i₂) erzeugt.

3. Stromversorgung nach Anspruch2, dadurch gekennzeichnet, daß die zweite Wicklung (W3) vollständig über den Transformator (T1) erzeugt wird.

4. Stromversorgung nach Anspruch 1, dadurch gekennzeichnet, daß der zweite Wicklungsstrom (i₂) mit der Lastschaltung (ANODE) während des Rücklaufs transformatorgekoppelt ist.

5. Stromversorgung nach Anspruch 1, dadurch gekennzeichnet, daß der erste Impuls (V1) mit einer Hochspannungswicklung (W2) des Transformators (T1) transformatorgekoppelt ist, und daß ein Gleichrichter (DHV) mit der Hochspannungswicklung verbunden ist, um aus dem ersten Impuls eine Endanodenspannung (U) und einen Strahlstrom (i_{BEAM}) zu erzeugen.

6. Stromversorgung nach Anspruch 5, dadurch gekennzeichnet, daß der Impulsbreitenmodulator (103) auf die Endanodenspannung (U) oder einen Strom (i_{BEAM}) anspricht, der in der Hochspannungswicklung fließt, um die Endanodenspannung in einer Rückkopplungsweise zu regeln.

7. Stromversorgung nach Anspruch 1, dadurch gekennzeichnet, daß die Modulation des impulsbreitenmodulierten Signals (V3) den Ablenkstrom (iy) nicht beeinflußt.

8. Stromversorgung nach Anspruch 1, dadurch gekennzeichnet, daß die Eingangs-Versorgungsspannung (B+) einen Strom (il) in der ersten Wicklung (W1) des Transformators (T1) erzeugt, um magnetische Energie in dem Transformator während des Hinlaufs zu speichern, wobei die gespeicherte Energie während des Rücklaufs Energieverluste in der Rücklauf-Resonanzschaltung (79) und in der Lastschaltung (ANODE) auffüllt.

9. Stromversorgung nach Anspruch 1, dadurch gekennzeichnet, daß das impulsbreitenmodulierte Signal (V3) während des Hinlaufs moduliert wird.

10. Stromversorgung nach Anspruch 1, gekennzeichnet durch eine Induktivität (L1), die mit der zweiten Wicklung (W3) des Transformators (T1) verbunden ist, um in der Induktivität einen ansteigenden zweiten Strom (i₂) zu führen, der eine Spitzenamplitude hat, die gemäß einem Strahlstrom (i_{BEAM}) moduliert wird, wobei die zweiten Schaltmittel (Q2) die Induktivität von dem Transformator während eines ersten Teils (t5 bis t6, Fig. 2b) eines Rücklaufintervalls (t3 bis t6) entkoppeln und während eines zweiten Teils (t3 bis t5) des Rücklaufintervalls die Induktivität mit dem Transformator koppeln, und wobei die Länge sowohl des ersten als auch des zweiten Teils sich gemäß dem Strahlstrom (i_{BEAM}) ändert.

11. Stromversorgung nach Anspruch 10, dadurch gekennzeichnet, daß die Induktivität (L1) in einem Stromweg des Stroms (i₂) in der zweiten Wicklung gebildet wird und über den Transformator (T1) mit der Rücklauf-Resonanzschaltung (79) verbunden ist, um die Rücklauf-Resonanzfrequenz der Rücklauf-Resonanzschaltung gemäß dem Strahlstrom (i_{BEAM}) so zu ändern, daß die Rücklauf-Zeit-Modulation, die durch eine Änderung des Strahlstroms verursacht wird, kompensiert wird.

12. Stromversorgung nach Anspruch 1, dadurch gekennzeichnet, daß die zweiten Schaltmittel (Q1, D1) einen Gleichrichter (D1) mit zwei Anschlüssen umfassen.

13. Stromversorgung nach Anspruch 1, dadurch gekennzeichnet, daß der Impulsbreitenmodulator (103) auf den Laststrom oder die Spannung (U) anspricht, um die Impulsbreite des modulierten Signals (V3) gemäß dem Laststrom oder der Spannung zu ändern.

14. Stromversorgung nach Anspruch 1, dadurch gekennzeichnet, daß der Ablenkstrom (iy) gemäß der Eingangs-Versorgungsspannung (B+) geregelt wird und von der Impulsbreitenmodulation unbeeinflußt bleibt.

## Revendications

1. Alimentation régulée pour un dispositif d'affichage vidéo comportant :
un circuit résonnant de retour (79) comportant une bobine de déviation (LH),
un transformateur de retour (T1),
une source (66) de tension d'entrée (B+) raccordée à un premier enroulement (W1) dudit transformateur,
un premier dispositif de commutation (Q1) raccordé à ladite bobine de déviation et audit transformateur qui, en fonction dudit signal d'entrée, génère un courant de déviation (iy) dans ladite bobine de déviation au cours d'un cycle de déviation et une première impulsion (V1) dans le premier enroulement dudit transformateur pendant le retour,
une source de signal d'entrée de synchronisation à une fréquence en relation avec la fréquence de déviation qui est raccordée à la base dudit premier dispositif de commutation (Q1),
un modulateur de largeur d'impulsion (103) qui, en fonction d'un signal de commande (V4), génère un signal modulé en largeur d'impulsions (V3), modulé en fonction dudit signal de commande, caractérisé par
un second dispositif de commutation (Q2, D1) raccordé à un second enroulement (W3) dudit transformateur et qui, en fonction dudit signal modulé en largeur d'impulsions, génère une seconde impulsion dans ledit second enroulement, pendant le retour, qui est modulée en fonction dudit signal modulé, ladite première impulsion et ladite seconde impulsion étant couplées par l'intermédiaire du transformateur à un circuit de charge (ANODE) afin de générer l'une des tensions de charge régulée (U) et un courant de charge régulé (i_{BEAM}) dans ledit circuit de charge, et
une inductance (L1) raccordée audit second enroulement et formant un circuit pour le courant qui génère un courant (i2) dans ledit second enroulement, dont la vitesse de variation au cours de l'aller du balayage est déterminée par la valeur de ladite inductance et modulée en fonction dudit signal modulé en largeur d'impulsions.

2. Alimentation selon la revendication 1 caractérisé par le fait que ledit premier dispositif de commutation (Q1) applique ladite tension d'entrée (B+) à travers ledit premier enroulement (W1) dudit transformateur (T1) pour coupler à travers le transformateur ladite tension d'entrée audit second enroulement pendant l'aller du balayage, afin de générer une tension dans ledit second enroulement qui produit dans ladite inductance (L1) le courant dudit second enroulement (i2).

3. Alimentation selon la revendication 2 caractérisée par le fait que ledit second enroulement (W3) est alimenté uniquement par l'intermédiaire dudit transformateur (T1).

4. Alimentation selon la revendication 1 caractérisée par le fait que le courant dudit second enroulement (i₂) est couplé par l'intermédiaire du transformateur audit circuit de charge (ANODE) pendant le retour.

5. Alimentation selon la revendication 1 caractérisée par le fait que ladite première impulsion (V1) est couplée par l'intermédiaire du transformateur à un enroulement haute tension (W2) dudit transformateur (T1), auquel ledit enroulement haute tension est raccordé un redresseur (DHV) pour la génération, à partir de ladite première impulsion, d'une très haute tension (U) et d'un courant de faisceau (i_{BEAM}).

6. Alimentation selon la revendication 5 caractérisée par le fait que ledit modulateur à largeur d'impulsions (103) régule la très haute tension par contre-réaction en fonction de ladite très haute tension (U) ou du courant (i_{BEAM}) qui circule à travers ledit enroulement haute tension.

7. Alimentation selon la revendication 1 caractérisée par le fait que la modulation dudit signal modulé en largeur d'impulsions (V3) n'a pas d'influence sur ledit courant de déviation (iy).

8. Alimentation selon la revendication 1 caractérisée par le fait que ladite tension d'alimentation d'entrée (B+) génère un courant (il) dans ledit premier enroulement (W1) dudit transformateur (T1) afin de stocker de l'énergie magnétique dans ledit transformateur pendant l'aller du balayage, l'énergie stockée servant à compenser les pertes d'énergie dans ledit circuit résonant de retour (79) dans ledit circuit de recharge (ANODE) pendant le retour.

9. Alimentation selon la revendication 1 caractérisée par le fait que ledit signal modulé en largeur d'impulsions (V3) est modulé pendant la période d'aller du balayage.

10. Alimentation selon la revendication 1 caractérisée par une inductance (L1) raccordée audit second enroulement (W3) dudit transformateur (T1) qui conduit dans ladite inductance un second courant en forme de rampe (I2) dont l'amplitude crête est modulée en fonction du courant de faisceau (i_{BEAM}), où ledit second dispositif de commutation (Q2) découple ladite inductance dudit transformateur pendant une première portion (t5-t6, figure 2b) de l'intervalle de retour (t3-t6) et couple ladite inductance audit transformateur pendant une seconde portion (t3-t5) dudit intervalle de retour et où la longueur desdites première et seconde portions varient en fonction dudit courant de faisceau (i_{BEAM}).

11. Alimentation selon la revendication 10 caractérisée par le fait que ladite inductance (L1) est placée dans le circuit de courant du courant dudit second enroulement (i2) et raccordée par l'intermédiaire dudit transformateur (T1) audit circuit résonnant de retour (79) afin de faire varier la fréquence de résonance de retour dudit circuit résonant de retour conformément audit courant de faisceau (i_{BEAM}) de manière à compenser la modulation de durée du retour causée par la variation dudit courant de faisceau.

12. Alimentation selon la revendication 1 caractérisée par le fait que ledit second dispositif de commutation (Q2, D1) comporte un redresseur à deux bornes (D1).

13. Alimentation selon la revendication 1 caractérisée par le fait que ledit modulateur de largeur d'impulsion (103) fait varier la largeur des impulsions dudit signal modulé (V3) en fonction soit du courant de charge, soit de la tension (U).

14. Alimentation selon la revendication 1 caractérisée par le fait que ledit courant de déviation (iy) est régulé en fonction de ladite tension d'alimentation d'entrée (B+) et n'est pas affecté par la modulation à largeur d'impulsion.
